# FASCICULE DE BREVET EUROPEEN

(11) **EP 3 624 362 B1**
(45) Date de publication et mention de la délivrance du brevet: **17.03.2021**
(21) Numéro de dépôt: 19197056.5
(22) Date de dépôt: 12.09.2019
(51) Int. Cl.: H04B 7/185

(54) **PROCÉDÉ DE DÉFINITION DE LA CHARGE UTILE FLEXIBLE D'UN SATELLITE DE TÉLÉCOMMUNICATION AVEC SAUTS DE FAISCEAUX À NIVEAU D'INTERFÉRENCE RÉDUIT**
DEFINITIONSVERFAHREN DER FLEXIBLEN NUTZLAST EINES TELEKOMMUNIKATIONSSATELLITEN MIT STRAHLENBÜNDELSPRUNG MIT REDUZIERTEM INTERFERENZPEGEL
METHOD FOR DEFINING THE FLEXIBLE PAYLOAD OF A TELECOMMUNICATIONS SATELLITE WITH BEAM STEPS WITH REDUCED INTERFERENCE LEVEL

(30) Priorité: 13.09.2018 FR 1800958
(43) Date de publication de la demande: 18.03.2020
(73) Titulaire: Thales, 92400 Courbevoie (FR); CENTRE NATIONAL D'ETUDES SPATIALES, 75039 Paris Cedex 01 (FR)
(72) Inventeur: CHARRAT, Bernard, 31100 Toulouse (FR); DERVIN, Mathieu, 31100 Toulouse (FR)
(74) Mandataire: Marks & Clerk France

(56) Documents cités:
- EP-A2- 1 973 240
- WO-A1-2017/211430
- US-A1- 2009 270 088
- US-A1- 2017 288 769

## Description

### DOMAINE DE L'INVENTION

L'invention se rapporte au domaine général des satellites de communication assurant des liaisons entre des utilisateurs évoluant dans une zone géographique donnée et les stations d'ancrage ("gateway" selon la dénomination anglo-saxonne) au travers desquelles les utilisateurs sont reliés au réseau par liaison satellite.

Elle se rapporte plus particulièrement aux satellites multispots et aux problèmes de répartition de la capacité globale du satellite, autrement dit de répartition du débit global d'information que peut assurer le satellite, entre les différents spots qui composent la surface couverte par ce dernier.

### CONTEXTE DE L'INVENTION - ART ANTERIEUR

Les opérateurs mettant en œuvre des satellites de télécommunication, demandent pour certains marchés, comme le marché Mobile large bande ("Broadband" selon la dénomination anglo-saxonne) par exemple, des solutions de répartition hétérogène de la capacité de communication sur la couverture. Dans ces marchés les zones élémentaires de faible demande connaissent de fortes variations de leur demande au cours du temps contrairement aux zones élémentaires de forte demande pour lesquelles le grand nombre d'utilisateur moyenne la demande. Aussi les opérateurs demandent pour ces missions de la flexibilité entre les zones élémentaires de faible demande.

Ils souhaitent également que ces solutions:
- minimisent la perte de capacité totale que pourrait engendrer cette flexibilité (surcroît d'interférences dans la couverture, pénalité sur la charge utile du satellite en termes de masse embarquée par Mbps (Mégabits par seconde) ou de puissance requise par Mbps, ...);
- minimisent, le nombre d'amplificateurs de forte puissance, des amplificateurs à tubes à ondes progressives (TOP) par exemple, nécessaires pour alimenter les antennes (éléments rayonnants) qui rayonnent les faisceaux correspondant aux différents spots (impact masse, consommation, coût réduit).
- minimise le nombre d'antennes nécessaires.

A l'heure actuelle, également, chacun des faisceaux émis par une antenne présente une bande passante correspondant à un débit d'information maximum fixe donné, ce débit max permettant l'établissement d'un nombre de communications maximum donné, et donc à un nombre donné d'utilisateurs du faisceau de communication considéré.

Généralement, les différents faisceaux d'une même antenne offre une capacité relativement homogène, quel que soit en réalité le nombre d'utilisateurs effectivement présents sur le spot considéré.

Or dans la pratique, il existe des disparités de demande sur chacun des spots, de sorte qu'on peut distinguer:
- des spots à faible densité de communications dans lesquels la capacité totale (c'est à dire le débit maximum) allouée est sous-exploitée, au moins à certaines périodes;
- des spots à forte densité de communications dans lesquels la capacité allouée au spot considéré est totalement exploitée et peut même s'avérer insuffisante à certaines périodes.

Par suite, pour tenir compte, autant que possible, de la distribution des utilisateurs sur la zone totale couverte et de l'hétérogénéité géographique de la demande servie par le satellite considéré, on est parfois amené à envisager une solution classique consistant à découper la zone totale en spots présentant des tailles différentes, ces spots étant par ailleurs éclairés par des faisceaux de tailles différentes, présentant toutefois une bande passante similaire.

On décompose alors la zone totale couverte par le satellite en spots de grandes tailles qui correspondent à des zones présentant une faible densité d'utilisateurs et des spots de plus petites tailles présentant une forte densité d'utilisateurs. Cette décomposition permet de moduler pour chaque faisceau le rapport capacité/surface éclairée et ainsi de distribuer au mieux la capacité de communication totale du satellite.

La mise en œuvre d'une telle solution a cependant pour inconvénient d'introduire des zones frontières avec de fortes interférences et aux performances dégradées (frontières entre des spots de forte demande et des spots de faible demande). Ces difficultés étant d'autant plus grandes que les zones de forte et de faible demande sont plus entremêlées.

Par ailleurs elle requiert la mise en place de plusieurs antennes de tailles de réflecteur différentes adaptées à la taille de chacun des spots à former, ce qui est très pénalisant en nombre d'antennes.

Une autre solution, pour tenir compte, autant que possible, de la distribution des utilisateurs sur la zone totale couverte par le satellite considéré, consiste à effectuer une allocation non homogène de la bande passante dont dispose le satellite entre les faisceaux couvrant les différents spots.

Cette allocation peut par exemple être réalisée par filtrage du signal satellite en aval de l'amplificateur de puissance situé à bord du satellite, avant la formation des différents faisceaux.

La mise en œuvre d'une telle solution outre qu'elle occasionne des développements de filtres spécifiques, des filtres très étroits pour les faisceaux destinés aux spots à très faible demande en particulier, a pour inconvénient de n'offrir aucune flexibilité entre les spots de faible demande et les spots de plus forte demande. Or, dans un marché mobile, les spots de faible demande connaissent de fortes variations dans le temps de leur demande, contrairement aux spots de forte demande, pour lesquels le grand nombre d'utilisateurs, permet un moyennage la demande au cours du temps.

Un document EP 1 973 240 A1 divulgue un procédé de communication par satellite à faisceau multiple.

### PRESENTATION DE L'INVENTION

Un but de l'invention est de proposer une solution permettant de répartir la capacité d'un satellite de manière hétérogène sur la zone couverte, tout en introduisant une flexibilité d'autant plus importante que la demande dans la zone concernée est faible.

Un autre but de l'invention est de proposer une solution qui soit économe en termes de quantité de matériel (nombre d'amplificateurs, d'antennes...) et donc en termes de masse embarquée.

A cet effet l'invention a pour objet, selon un premier aspect un procédé pour distribuer la capacité d'un satellite de communication sur les différents faisceaux destinés à couvrir une zone géographique donnée, ladite zone étant décomposée en une pluralité de spots, chaque spot étant éclairé par un faisceau donné émis par un élément rayonnant d'une antenne satellite et nécessitant une capacité donnée. Le procédé selon l'invention met en œuvre:
- une première étape de définition, pour chaque faisceau, de la capacité dont doit bénéficier le faisceau compte tenu de la densité des échanges se produisant au niveau du spot correspondant;
- une deuxième étape d'élaboration d'une table indiquant, pour un amplificateur de puissance présentant différentes caractéristiques de puissance et de bande passante de fonctionnement, le nombre maximum Pᵢ de faisceaux que l'amplificateur peut servir ainsi que la capacité moyenne allouée à chaque faisceau, en fonction des différents schémas de partage de l'amplificateur.
- une troisième étape de formation de groupes de faisceaux, chaque groupe étant caractérisé par la valeur moyenne de la capacité des faisceaux constituant le groupe considéré et la détermination du nombre d'amplificateurs nécessaires à chaque groupe pour servir l'ensemble des faisceaux constituant ce groupe;
- une quatrième étape d'allocation des ressources disponibles, durant laquelle le procédé répartit les différents faisceaux sur différents amplificateurs, les faisceaux affectés à un même amplificateur étant déterminés de telle façon que la valeur moyenne de la capacité demandée à ces faisceaux soit sensiblement égale à la capacité moyenne de référence calculée pour le groupe considéré.
Selon diverses dispositions, le procédé selon l'invention comporte également les caractéristiques suivantes.

Selon une première caractéristique la troisième étape est une étape itérative qui met en œuvre les sous-étapes suivantes:
- une première sous-étape durant laquelle le procédé réalise, pour un ensemble de N_{T} faisceaux classés par ordre croissant de capacité, le calcul de la valeur moyenne de la capacité cumulée de ces faisceaux, la capacité requise pour chaque faisceau ayant été déterminée au cours de la première étape;
- une seconde sous-étape, durant laquelle le procédé selon l'invention associe dans un même groupe i les Nᵢ faisceaux pour lesquels la valeur moyenne de la capacité cumulée est la plus proche d'une valeur donnée, Ci_obj, de capacité moyenne par faisceau; cette valeur étant déterminée, à partir des données de la table élaborée au cours de la deuxième étape, de façon à maximaliser le nombre de faisceau pouvant être servis par les amplificateurs de puissance dont dispose le satellite tout en assurant un bilan de liaison optimal;
les Nᵢ faisceaux associés dans un même groupe i à l'issue d'une itération donnée étant retirés des N faisceaux considérés pour l'exécution d'une nouvelle itération; les itérations étant interrompues dès que les N_{T} faisceaux sont regroupés.

Selon une autre caractéristique, lors de la quatrième étape d'allocation des ressources le procédé réalise le couplage de plusieurs faisceaux nombre fonction du schéma de partage du groupe constituant un même groupe i et utilisant la même sous bande pour les associés à un amplificateur donné.

Selon une autre caractéristique, la quatrième étape comporte les phases d'exécution suivantes:
- une première phase durant laquelle on classe chaque groupe de faisceaux formé en fonction du schéma de partage qui lui est associé, les groupes de faisceaux associés à un schéma de partage ne comportant ni partage de puissance (Beam Coupling) ou ni multiplexage temporel (Beam Hopping) ne faisant pas l'objet d'aucune opération de regroupement systématique ultérieur;
   une deuxième phase durant laquelle on détermine, pour chaque groupe susceptible de faire l'objet d'une opération de regroupement si le schéma de partage qui lui est associé comporte un partage de puissance (Beam Coupling) sur N faisceaux;
   une troisième phase qui réalise le regroupement par N des faisceaux du groupe considéré; cette troisième phase étant exécuté si le schéma de partage associé au groupe comporte un partage de puissance (Beam Coupling) sur N faisceaux;
- une quatrième phase durant laquelle on détermine, pour chaque groupe susceptible de faire l'objet d'une opération de regroupement si le schéma de partage qui lui est associé comporte un multiplexage temporel (Beam Hopping) sur M faisceaux;
- une cinquième phase durant laquelle on réalise le regroupement par M des faisceaux du groupe considéré; cette cinquième phase étant exécuté si le schéma de partage associé au groupe comporte un multiplexage temporel (Beam Hopping) sur M faisceaux;
- une sixième phase durant laquelle on réalise pour chaque groupe, en fonction des regroupements réalisés, l'affectation d'un amplificateur à chaque faisceau.
- une septième phase durant laquelle, pour chaque groupe n'ayant fait l'objet d'aucun regroupement de ses faisceaux, on réalise l'affectation directe d'un amplificateur à chaque faisceau.

Selon une autre caractéristique, pour chaque groupe associé à un schéma de partage comportant un partage de puissance (Beam Coupling) et un multiplexage temporel (Beam Hopping), la cinquième phase réalise un regroupement des faisceaux du groupe en utilisant le regroupement en sous-groupes de N faisceaux réalisé au cours de la troisième phase de la quatrième étape.

Selon une autre caractéristique, durant la cinquième phase de la quatrième étape, les regroupements de faisceaux consistent à regrouper les sous-groupes de N faisceaux en structures constituées chacune par k.2N faisceaux, ces structures étant constituée en réalisant en deux étapes:
- une première étape itérative de réalisation de structures à 2N faisceaux contenant les faisceaux de deux groupes de N faisceaux, de telle sorte que chaque structure est formée par celui des groupes non encore associés présentant la capacité cumulée maximale et celui des groupes non encore associés présentant avec lui la capacité cumulée minimale;
- une seconde étape itérative de réalisation de structures contenant les faisceaux de 2k groupes de N faisceaux (k>1 : si k=1 le processus s'arrête au regroupement à 2N faisceaux décrit précédemment);
la second étape étant répétée de manière itérative jusqu'à ce que l'on obtienne des structures à M·N faisceaux, M·N étant égal au nombre de faisceaux pouvant être servi par un amplificateur pour la sous-bande considérée, conformément au schéma de partage retenu.

Selon une autre caractéristique, la première étape, de réalisation de structures à 2N faisceaux contenant les faisceaux de deux groupes de N faisceaux, consiste à effectuer les opérations suivantes:
- détermination du groupe de N faisceaux présentant la capacité cumulée maximale;
- détermination d'un second groupe de N faisceaux présentant en addition avec le premier la capacité cumulée minimale;
- association des deux groupes pour former une structure à 2N faisceaux;
- répétition des opérations précédentes jusqu'à ce que tous les groupes de N faisceaux soient regroupés en structures à 2N faisceaux, ou qu'il ne reste plus qu'un groupe.

Selon une autre caractéristique, la seconde étape itérative de réalisation de structures contenant les faisceaux de 2k groupes de N faisceaux consiste à effectuer les opérations suivantes:
- détermination de la structure à k.N faisceaux présentant la capacité cumulée maximale;
- détermination d'un second groupe de k.N faisceaux présentant en addition avec le premier la capacité cumulée minimale;
- association des deux structures pour former une structure à 2k.N faisceaux;
- répétition jusqu'à ce que toutes les structures à k.N faisceaux soient regroupées en structures à 2k.N faisceaux ou qu'il ne reste plus qu'une structure;
chaque structure étant formée, pour une itération donnée, par celle des structures non encore associées présentant la capacité cumulée maximale et celle des structures non encore associées présentant avec lui la capacité cumulée minimale.

Selon une autre caractéristique, la quatrième étape comporte une phase complémentaire d'optimisation finale des ressources consistant en un traitement intergroupes, qui recense les amplificateurs exploités de manière partielle dans le cadre d'un groupe de faisceaux, et qui attribue ces amplificateurs à des faisceaux d'un groupe différent utilisant la bande non utilisée par le premier groupe.

### DESCRIPTION DES FIGURES

Les caractéristiques et avantages de l'invention seront mieux appréciés grâce à la description qui suit, description qui s'appuie sur les figures annexées qui présentent:
la figure1, une illustration d'un exemple de couverture d'une zone géographique au moyen d'un satellite géostationnaire équipé d'un système antennaire à quatre antennes multi-sources;
la figure 2, un synoptique des différentes étapes du procédé selon l'invention;
la figure 3, une illustration relative à la deuxième étape du procédé selon l'invention, représentant un exemple de table présentant les différentes possibilités d'allocation des ressources d'un amplificateur de puissance en fonction du schéma de partage retenu ainsi que les capacités maximales par faisceau correspondant aux différents schémas de partage;
la figure 4, un synoptique fonctionnel détaillé de la troisième étape du procédé selon l'invention;
la figure 5, une représentation graphique d'un exemple de variation de la valeur moyenne de la capacité cumulée sur le nombre total de faisceaux à servir, utilisée lors de la première itération de la troisième étape du procédé selon l'invention;
la figure 6, une représentation graphique d'un exemple de variation de la valeur moyenne de la capacité cumulée sur le nombre de faisceaux à servir non regroupés à l'issues de la première itération et utilisée lors de la seconde itération de la troisième étape du procédé selon l'invention;
les figures 7 et 8, des illustrations du principe d'affectation des bandes passantes aux différents faisceaux formant la couverture satellite;
la figure 9, un synoptique des différentes phases de la quatrième étape du procédé selon l'invention.

Il est à noter que, sur les figures annexées, un même élément fonctionnel ou structurel porte de préférence un même symbole repère.

### DESCRIPTION DETAILLEE

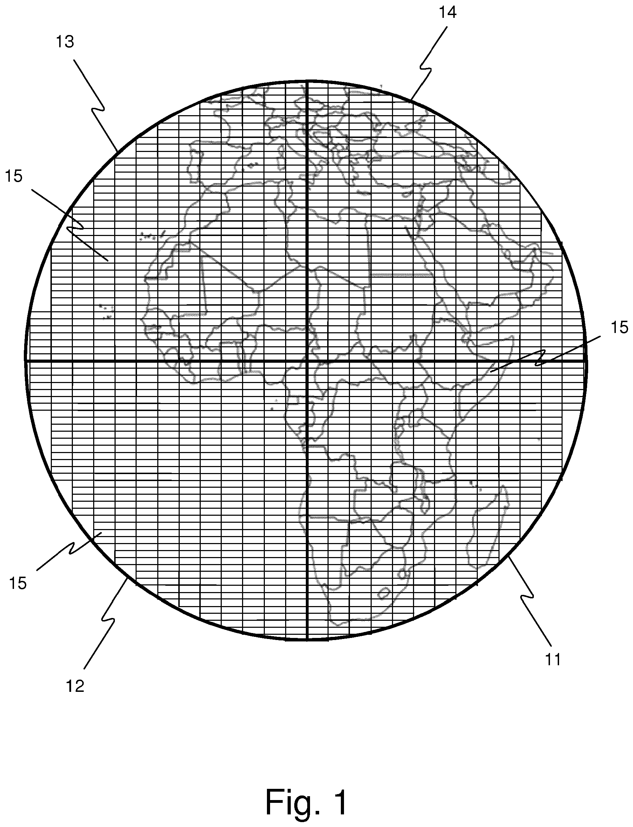

La figure 1 présente un exemple de couverture d'une zone géographique par un satellite géostationnaire présentant une structure antennaire comportant quatre antennes 11-14, couvrant la zone considérée de manière uniforme.

Comme l'illustre la figure, chaque antenne 11-14 rayonne des faisceaux radioélectriques élémentaires de forme géométrique rectangulaire. Les faisceaux rayonnés couvrent ainsi des zones géographiques élémentaires, ou spots, disposées de manière rectiligne en lignes et/ou colonnes juxtaposées.

Chaque faisceau élémentaire illumine ainsi une zone géographique élémentaire 15, dans laquelle un nombre d'utilisateurs peut se trouver localisé, ce nombre étant a priori variable notamment en fonction de la zone élémentaire couverte, qui peut par exemple se situer sur la terre ferme ou sur la mer.

Cette structure à quatre antennes est ici considérée de façon à servir de support à la description et ne peut être considérée comme ayant pour objet de limiter la portée ou l'étendue de l'invention. Notamment il est possible de déployer le procédé selon l'invention sur des satellites, géostationnaires ou non, comportant un nombre d'antennes différent, servant des faisceaux présentant une autre forme géométrique, une forme polygonale ou circulaire par exemple.

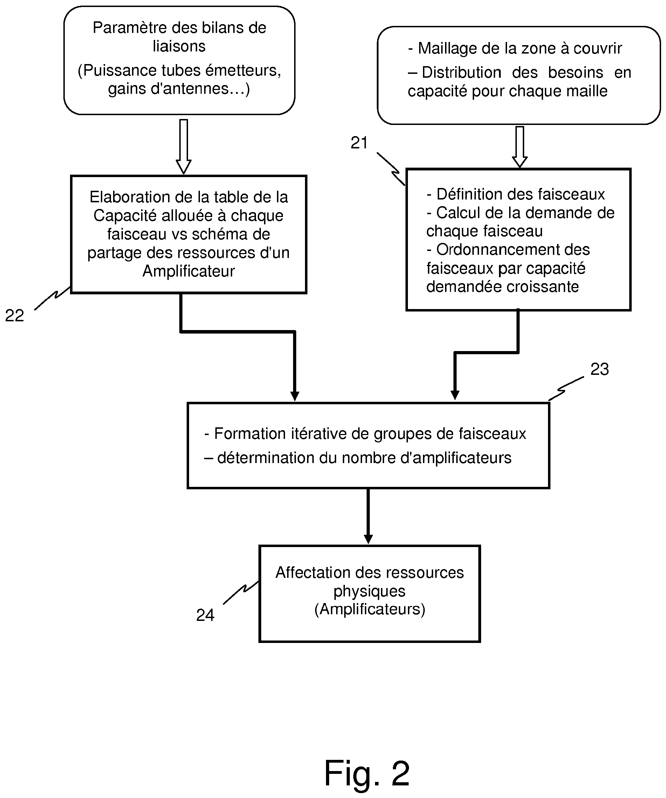

La figure 2 présente, sous forme d'organigramme, les différentes étapes du procédé d'allocation de la capacité totale d'un satellite selon l'invention.

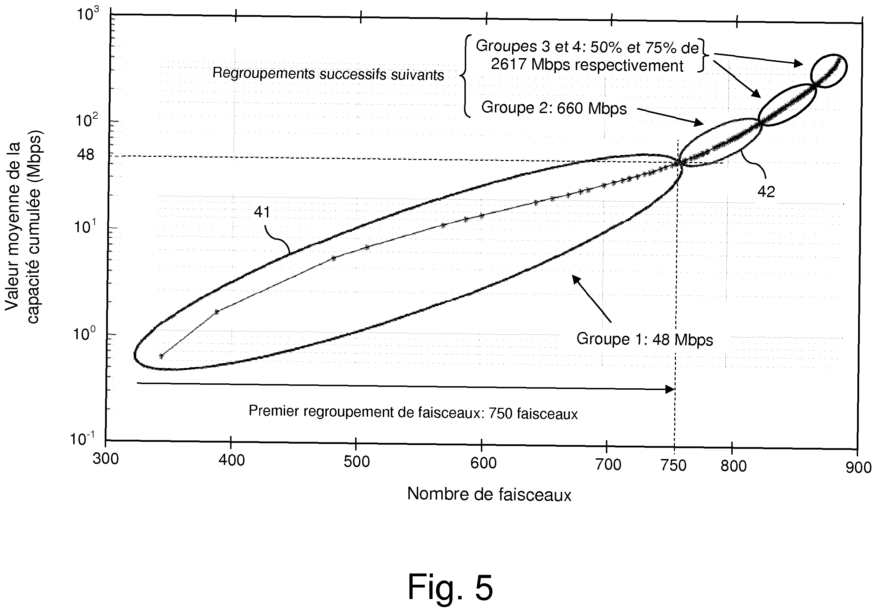

Le procédé selon l'invention comporte principalement:
- une première étape 21 de dimensionnement préliminaire du nombre maximum de faisceaux satellite, de définition de la capacité demandée par chacun des faisceaux, et d'ordonnancement des faisceaux par capacité demandée croissante;
- une deuxième étape 22 d'élaboration de la table définissant, pour différents schémas de partage, le nombre de faisceaux servis par un amplificateur de puissance donné et la capacité allouée à chaque faisceau servi par cet amplificateur; cette étape étant préférentiellement réalisé en parallèle de l'étape 21 ;
- une troisième étape 23, de formation de groupes de faisceaux à partir des N_{T} faisceaux que le satellite doit servir, cette étape comportant
   - une première sous-étape 231 de calcul de la valeur moyenne de la capacité cumulée des N premiers faisceaux rangés par ordre de demande de capacité croissante en partant du plus petit; N pouvant varier de 1 au nombre total N_{T} de faisceaux, ladite étape permettant d'obtenir un graphe, dont un exemple est donné par la figure 5.
   - une seconde sous-étape 232 de constitution, à partir des N_{T} faisceaux, d'un groupe de Nᵢ faisceaux (Nᵢ ≤ N_{T}), ce groupe étant déterminé à partir d'une valeur de capacité moyenne Cm donnée. Cette étape est réalisée, en utilisant le graphe déterminé à l'étape précédente.

La valeur de capacité Cm associée à un groupe est par ailleurs définie en fonction du schéma de partage que l'on souhaite appliquer aux faisceaux de ce groupe.

De manière préférentielle les faisceaux formant un même groupe sont déterminés de telle façon que la capacité moyenne Cm demandée par les faisceaux du groupe ainsi formé soit la plus proche possible de la capacité allouée à chaque faisceau du groupe, cette capacité étant estimée lors de l'étape 22 pour le schéma de partage considéré.

La troisième étape 23 est effectuée de manière itérative, les Nᵢ faisceaux regroupés à l'issue d'une itération donnée étant exclus pour l'itération suivante.
- une quatrième étape 24 d'affectation, aux différents groupes de faisceaux formés à l'issue de la troisième étape 23, des ressources en amplificateurs dont dispose le satellite considéré.

La première étape 21 a pour fonction de répartir, selon un maillage régulier, les différents faisceaux que peut servir le satellite. Plus le nombre maximum N_{T} de faisceaux que peut produire le satellite est grand et plus la taille d'un spot sera petite.

L'étape 21 a également pour fonction d'affecter à chaque faisceau une capacité requise donnée, fonction de la demande de capacité associée à la zone élémentaire, ou aux zones élémentaires, couvertes par le faisceau considéré, puis de réaliser l'ordonnancement des différents faisceaux par valeurs de capacité croissantes.

Cet ordonnancement peut par exemple être matérialisé par un tableau, mis en mémoire, dans lequel sont rangés, par ordre de capacités demandées croissantes, l'identifiant de chaque faisceau (numéro du faisceau) et la valeur de la capacité demandée pour le faisceau considéré.

Au cours de la deuxième étape 22, le procédé selon l'invention détermine, pour différents types d'amplificateurs de forte puissance, et pour différents schémas de partage possibles de la capacité de l'amplificateur considéré, le nombre de faisceaux pouvant être alimentés par l'amplificateur et la capacité délivrée aux différents faisceaux.

Cette détermination est réalisée en prenant en compte des hypothèses de bilan de liaison (amplificateur de puissance bord - sol, antenne bord - sol, etc...).

Les configurations retenues dans le cadre de l'invention sont déterminées par la combinaison des modes de fonctionnement supportés par l'amplificateur de puissance considéré :
- fonctionnement en bande complète ou division en plusieurs sous-bandes de fréquences,
- fonctionnement en temps partagé ou division temporelle (Beam Hopping) pour servir un ou plusieurs faisceaux;
- fonctionnement par partage de la puissance de l'amplificateur dans sa bande de fonctionnement vers plusieurs faisceaux (Beam Coupling)

Chaque configuration (combinaison des trois modes de fonctionnements décrits précédemment) détermine ainsi le nombre de faisceaux que peut servir un amplificateur de puissance et la capacité moyenne attribuée à chaque faisceau.

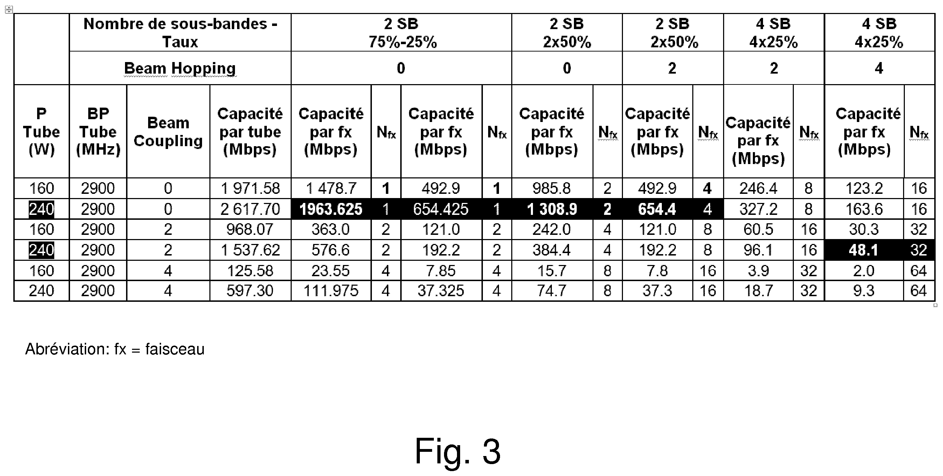

En pratique, ces valeurs de capacité sont, par exemple, mémorisées dans une table, ayant pour entrées les valeurs des paramètres de fonctionnement correspondant aux différents schémas de répartition envisagés tels que ceux illustrés par la figure 3.

La capacité moyenne par faisceau associée à un amplificateur est calculée en faisant le produit de la bande passante associée au faisceau (exprimée en Hz) par l'efficacité spectrale (exprimée en bits/seconde/Hz) estimée pour un bilan de liaison moyen dans la couverture assurée par le satellite.

Ce bilan de liaison moyen est réalisé avec des hypothèses indépendantes du schéma de partage (performance de l'antenne des terminaux utilisateurs, performance de l'antenne du satellite, pertes atmosphériques, pertes en espace libre...), en considérant l'impact induit par l'utilisation du fonctionnement Beam Coupling.

La figure 3 présente un exemple de tableau indiquant pour un amplificateur de puissance donné, un amplificateur à ondes progressives dans l'exemple, en fonction de la puissance qu'il peut fournir (160 Watts ou 240 Watts dans l'exemple présenté) et de sa bande de fréquence de travail (2900 MHz dans cet exemple), le nombre de faisceaux que peut alimenter cet amplificateur et la capacité dont dispose chaque faisceau, selon différents schémas de répartition correspondant à différentes associations des configurations fonctionnelles (division en sous-bandes, fonctionnement en "Beam Hopping" et "Beam coupling") décrites précédemment.

Ainsi si l'on considère le tableau de la figure 3, on constate que pour un amplificateur de puissance de bande passante donnée, selon les schémas de répartition considérés dans cet exemple, on peut former avec un même amplificateur de 2 à 64 faisceaux, ces faisceaux présentant des capacités différentes.

Selon l'invention, une sélection de schémas de répartition est effectuée de manière à permettre une répartition des faisceaux entre ces schémas, qui optimise le compromis entre:
- l'adéquation entre la capacité offerte et la capacité requise dans ces faisceaux et,
- le nombre total d'amplificateurs de puissance requis.

Dans ce but, les schémas retenus doivent couvrir une large plage de valeurs de capacité par faisceau, et ainsi permettre de concilier un fort partage de la capacité pour les amplificateurs de puissance associés aux faisceaux de moindre demande et un partage moins important de la capacité pour les amplificateurs de puissance associés aux faisceaux de forte demande.

Comme cela a été dit précédemment, la troisième étape 23 a pour fonction de réaliser le regroupement des N_{T}, faisceaux à servir en groupes, chaque groupe de Nᵢ faisceaux étant servi par un nombre d'amplificateurs de puissance donné, mis en œuvre selon un même schéma de partage de ressources, ce schéma de partage définissant, pour un amplificateur, une valeur moyenne de capacité par faisceau servi.

On détermine ainsi, le nombre d'amplificateurs de puissance nécessaires pour servir l'ensemble des N_{T} faisceaux considérés, avec une capacité la plus proche possible, pour chaque faisceau, de la capacité requise, ainsi que les configurations de fonctionnement des amplificateurs pour chacun des groupes de faisceaux formés.

Selon l'invention, les sections de sortie associées aux amplificateurs servant un groupe de faisceaux donné suivent toutes le même schéma de partage. Une section de sortie est matérialisée par un amplificateur de puissance et par les composants situés en aval d'un amplificateur.

Selon l'invention également, chaque groupe est constitué, en fonction d'une valeur donnée de capacité moyenne par faisceau Cm, de telle façon que la valeur moyenne de la capacité cumulée des faisceaux du groupe considéré soit sensiblement égale à la valeur Cm associée au groupe considéré.

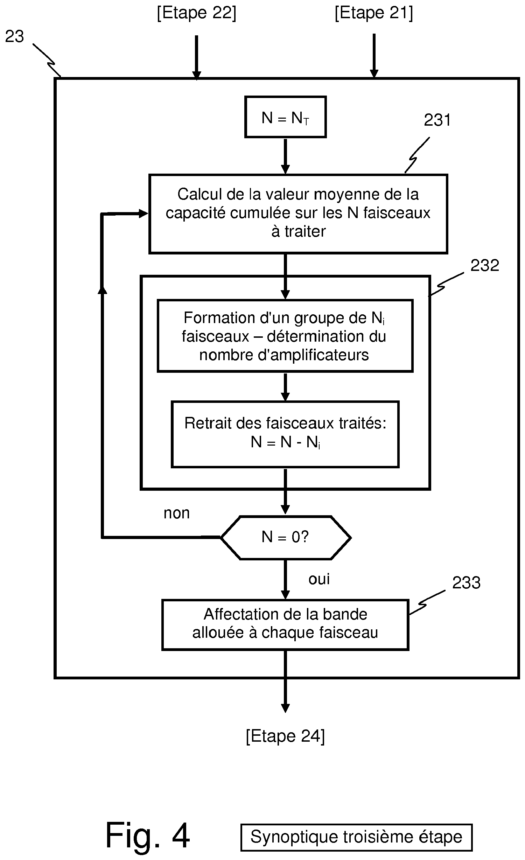

Pour réaliser cette répartition des faisceaux par groupes, l'étape 23 comporte, comme l'illustre l'organigramme de la figure 4, deux sous-étapes 231 et 232 exécutées itérativement et dont l'exécution permet de former successivement les différents groupes.

La première sous-étape 231 réalise, pour un ensemble de N faisceaux classés par ordre croissant de capacité, le calcul de la valeur moyenne de la capacité cumulée de ces faisceaux, la capacité requise pour chaque faisceau ayant été déterminée au cours de la première étape 21.

Cette fonction peut être représentée pour la première itération de cette étape (N = N_{T}) par une courbe telle que celle de la figure 5, qui représente l'évolution de la valeur moyenne de la capacité cumulée en fonction du nombre n de faisceaux pris en compte dans le calcul, l'ensemble des faisceaux étant considérés.

La figure 5 porte sur un système, pris comme exemple, comportant N_{T} = 890 faisceaux, pour lesquels la valeur moyenne de la capacité cumulée varie de quelques dizaines de kilobits par seconde (Kbps) à quelques milliers de mégabits par seconde (Mbps). La valeur moyenne de la capacité cumulée est représentée ici pour l'ensemble des N_{T} faisceaux.

En pratique, les valeurs successives de la moyenne de la capacité cumulée pour N faisceaux, N pouvant varier de 1 à N_{T} peuvent être stockées dans une table à N_{T} valeurs.

La seconde sous-étape 232, associe dans un même groupe les faisceaux pour lesquels la valeur moyenne de la capacité cumulée est la plus proche d'une valeur donnée, Cm, de capacité moyenne par faisceau.

Cette capacité Cm est sélectionnée, dans la table élaborée au cours de la deuxième étape 22, de façon à maximaliser le nombre de faisceau pouvant être servis par les amplificateurs de puissance dont dispose le satellite tout en assurant un bilan de liaison optimal.

Le nombre Nᵢ de faisceaux constituant le groupe de rang i ainsi formé détermine le nombre d'amplificateurs nécessaires pour servir ces faisceaux, la capacité Cm associée à ce groupe correspondant au schéma de partage associé aux amplificateurs de puissance servant le groupe de faisceau ainsi formé.

Selon l'invention l'étape 23 est exécutée de manière itérative, en considérant des valeurs de la capacité moyenne Cm croissantes d'une itération à la suivante.

Ainsi, comme l'illustre l'exemple de la figure 5, l'étape 23 est exécutée une première fois en considérant l'ensemble des N_{T} faisceaux:
- au cours de la sous-étape 231 on effectue le calcul de la variation de la valeur moyenne de la capacité cumulée en prenant de 1 à N_{T} faisceaux. Les valeurs moyennes de la capacité cumulée sont par exemple mémorisées dans une table pour chaque itération de l'étape 23.

Puis au cours de la sous-étape 232, on forme un premier groupe de faisceaux 41, qui comprend les N₁ faisceaux présentant les besoins en capacité les plus faibles, pour lesquels la valeur moyenne de la capacité cumulée est la plus proche d'une première valeur Cm₁ de capacité moyenne.

Selon l'invention, cette valeur Cm₁ est sélectionnée dans le tableau obtenu après exécution de l'étape 22 (deuxième étape).

L'étape 23 est ensuite exécutée de manière itérative en considérant, à chaque itération i, ceux des N_{T} faisceaux qui ne sont pas encore assemblés en groupes.

En pratique, on détermine, avant chaque itération i, le nombre Nᵢ de faisceaux non encore regroupés puis on applique à ces faisceaux les sous-étapes 231 et 232 en considérant une nouvelle valeur Cmᵢ de capacité adaptée aux faisceaux restant.

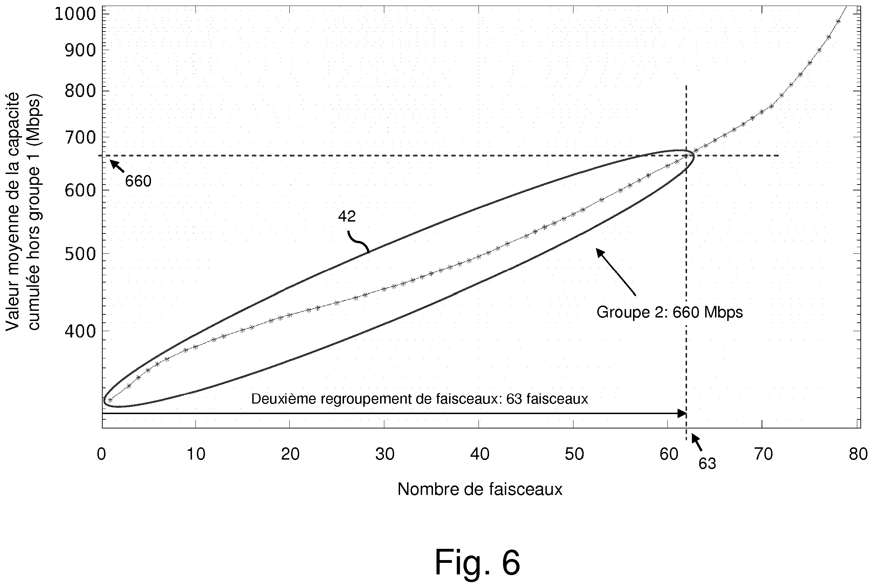

La figure 6 illustre le principe de fonctionnement de la sous-étape 232 pour la deuxième itération.

A chaque itération i on groupe ainsi les faisceaux pour lesquels la valeur moyenne de capacité cumulée est la plus proche d'une valeur de capacité Cmᵢ considérée pour l'itération courante.

Il est à noter ici, qu'au fil des itérations, les faisceaux regroupés dans un même groupe présentent une valeur moyenne de capacité cumulée de plus en plus importante.

Par suite, la valeur Cmᵢ à partir de laquelle un groupe est constitué tend à devenir elle aussi de plus en plus importante.

Selon l'invention, les itérations 231 et 232 de l'étape 23 cessent lorsque tous les N_{T} faisceaux sont regroupés.

Les figures 3, 5 et 6 permettent de mieux comprendre le principe de fonctionnement de l'étape 23, en considérant un exemple de mise en œuvre portant sur un satellite disposant d'un nombre maximum de 60 amplificateurs pour servir un nombre de faisceaux égal à 890.

On constate, dans une telle configuration, que chaque amplificateur se voit chargé de servir, en moyenne, sensiblement 15 faisceaux.

il est à noter que le nombre maximum d'amplificateurs dont dispose un satellite est, en pratique, déterminé par les limites des budgets masse et puissance du satellite, ainsi que par d'autres facteurs, comme par exemple les contraintes d'aménagement de ces équipements sur la plate-forme satellite.

Ainsi, si l'on considère la table de la figure 3, par exemple, on constate que si l'on choisit des amplificateurs de type TOP d'une puissance de 240 W et disposant d'une bande passante de 2900 MHz, le schéma de partage qui permet de servir un nombre suffisant de faisceau (un nombre bien supérieur à 15 pour le premier groupe) et qui offre la plus grande capacité moyenne par faisceau, est celui pour lequel chaque amplificateur fonctionne dans une configuration où sa bande passante est scindée en quatre sous-bandes chaque sous bande étant utilisée pour servir séquentiellement huit faisceaux ("Beam Hopping" égal à 4 et "Beam Coupling" égal à 2).

Avec un tel schéma, chaque amplificateur peut servir 32 faisceaux en partage temporel, chaque faisceau disposant d'une capacité moyenne sensiblement égale à 48 Mb/s.

Par suite la constitution, au cours de la première itération de l'étape 23, du premier groupe de faisceaux, qui rassemble les faisceaux de capacité la plus faible, est réalisé en déterminant à partir de la tables des valeurs moyennes de capacité cumulée établie à l'issue de l'étape 231, les faisceaux de plus basse capacité pour lesquels la valeur moyenne de capacité cumulée est la plus proche de la capacité moyenne Cm₁ retenue (48 Mbps). Cette valeur moyenne correspondant à un nombre N₁ donné de faisceaux, 750 faisceaux dans l'exemple illustré par la figure 5.

A l'issue d'une première itération de l'étape 23, on forme ainsi un premier groupe de 750 faisceaux, le nombre d'amplificateurs nécessaires pour servir ces faisceaux (750/32 = 24 amplificateurs) étant déterminé par le nombre de faisceaux pouvant être servi par un amplificateur fonctionnant selon le premier schéma de partage retenu.

L'étape 23 est ensuite réitérée de façon à constituer un nouveau groupe à chaque itération i, chaque itération étant exécutée pour un nombre N de faisceau décroissant, les faisceaux formant déjà un groupe n'étant plus pris en compte.

A chaque nouvelle itération, on établit pour les faisceaux restants, une nouvelle table de valeurs moyennes de capacité cumulée puis au cours de l'étape 232 on recherche dans la table des valeurs moyennes obtenues, la valeur moyenne la plus proche d'une des valeurs moyennes Cm de capacité par faisceau délivrée par un amplificateur pour les différents schémas de partage considérés lors de la seconde étape 22.

Le schéma de partage retenu est alors celui associé à la valeur Cm retenue.

Ainsi, dans l'exemple considéré, on définit un deuxième groupe de faisceaux 42 pour lequel la moyenne de la capacité cumulée est proche de 660 Mbps capacité correspondant sensiblement, comme l'illustre le tableau de la figure 3, à la capacité délivrée à chaque faisceau par un amplificateur fonctionnant selon un schéma de partage où sa bande passante est scindée en deux sous-bandes chaque sous bande étant utilisée pour servir séquentiellement deux faisceaux ("Beam Hopping" égal à 2 et pas de "Beam Coupling").

On considère ensuite, dans le cadre d'une troisième itération, les faisceaux restants (non regroupés).

Ces faisceaux requérant une capacité supérieure à 1300 Mb/s, sont traités en considérant le schéma de partage de la section de sortie faisant intervenir simplement une division en deux sous-bandes, qui permet à un amplificateur de fournir une capacité Cm de l'ordre de 1300 Mbps.

Pour les plus demandeur (demande > 1300 Mbps) on peut par ailleurs envisager un partage de bande passante en deux sous-bandes de largeurs inégales, la sous-bande égale à 75% de la bande de l'amplificateur étant attribué aux faisceaux très demandeurs, fournissant une capacité proche de 2000 Mbps.

A l'issue de l'étape 232 chaque groupe de faisceau est ainsi associé à une largeur de bande de fréquences donnée correspondant à la largeur de bande associée au groupe de faisceau auquel il appartient. Cette bande de fréquences couvre avantageusement la capacité nécessaire pour servir le faisceau considéré.

L'étape 23 comporte également une étape finale 233, qui est exécuté lorsque tous les faisceaux sont répartis dans des groupes, durant laquelle on alloue à chaque faisceau, en fonction du groupe dans lequel il est placé, une bande de fréquence précise, cette bande de fréquence ayant la largeur attribuée au groupe auquel le faisceau appartient.

Selon l'invention, cette allocation est réalisée en tenant compte d'un schéma d'allocation élémentaire qui attribue une couleur à chaque faisceau constituant la couverture assurée par le satellite.

Par couleur on entend ici un attribut constitué, pour chaque faisceau, par la largeur de bande attribuée au faisceau considéré ou, dans le cas d'un satellite pourvu d'une antenne fonctionnement selon deux axes de polarisation, par un couple (bande de fréquence, axe de polarisation) sachant que pour un faisceau donné l'axe de polarisation est fixé par l'élément rayonnant servant le faisceau considéré.

Le schéma d'allocation est déterminé, en tenant compte des différents groupes de faisceaux formés lors de l'étape 232, et des axes de polarisation attribués aux différents faisceaux, de telle façon que deux spots voisins se voient attribuer une couleur distincte de façon à garantir le meilleur découplage possible entre les deux spots considérés.

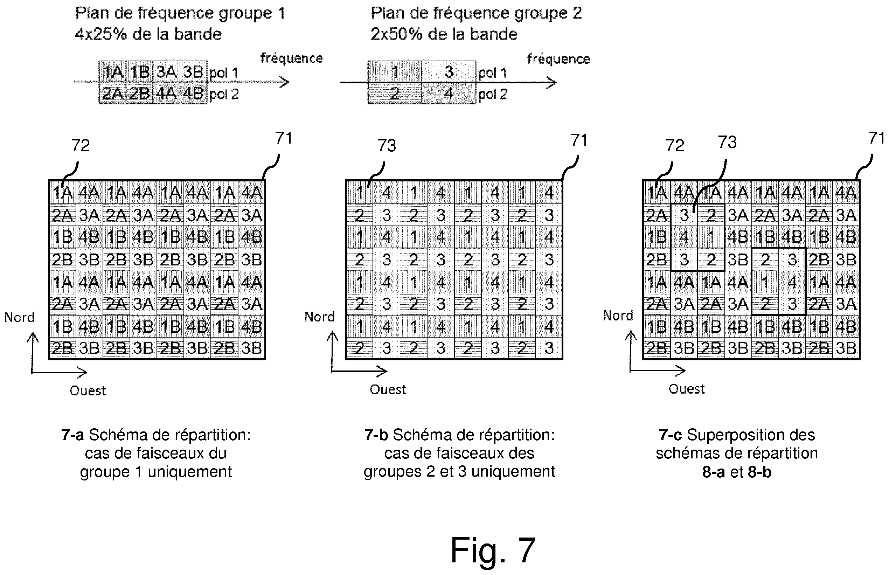

La figure 7 illustre le principe de fonctionnement de cette étape à travers un exemple de mise en œuvre particulier correspondant à un agencement rectiligne, matriciel, des faisceaux, en lignes et colonnes, agencement qui correspond à la couverture satellite illustrée par la figure 1.

L'illustration 7-a présente un premier schéma correspondant à l'affectation à chaque faisceau d'une largeur de bande égale au quart de la bande passante d'un amplificateur, deux faisceaux voisins sur une même ligne ou une même colonne étant affecté de deux axes de polarisation, pol1 et pol2, distincts.

Un tel schéma de répartition correspond au cas où tous les faisceaux sont des faisceaux semblables, en capacité, à ceux du groupe 1 des groupes défini dans l'exemple illustrant l'étape 23 décrite précédemment (cf. figure 5).

L'illustration 7-b présente, quant à elle, un second schéma de répartition correspondant à l'affectation à chaque faisceau d'une largeur de bande égale à la moitié de la bande passante d'un amplificateur, deux faisceaux voisins sur une même ligne ou une même colonne étant affecté, comme dans le cas de l'illustration 7-a, de deux axes de polarisation, pol1 et pol2, distincts.

Ainsi selon ce second schéma, les largeurs de bandes affectées aux faisceaux sont agencées selon une même répartition géographique des polarisations et des sous-bandes. Autrement dit, un spot 72 du schéma de répartition 7-a se voit attribuer une même polarisation que le spot 73 correspondant du schéma de répartition 7-b et la sous-bande attribuée au spot 72 est incluse dans la sous-bande du spot 73 correspondant.

Un tel schéma de répartition correspond au cas où tous les faisceaux 73 sont des faisceaux semblables, en capacité, à ceux des groupes 2 et 3 définis dans l'exemple illustrant l'étape 23 décrite précédemment (cf. figure 6).

L'exemple de la figure 7 permet de constater que l'utilisation au cours de l'étape 22 d'un schéma de partage faisant intervenir un partage de la bande passante d'un amplificateur de puissance en deux ou quatre sous-bandes permet avantageusement d'élaborer, de manière simple, un schéma de répartition prenant en compte à la fois des faisceaux 72 appartenant au groupe 1 et des faisceaux 73 appartenant aux groupes 2 et 3, les schémas de répartition étant susceptibles de se superposer, comme l'illustre la figure 7-c, sans que cette superposition introduise d'interférences supplémentaires entre faisceaux.

A l'issue de l'étape 233 chaque faisceau est ainsi associé à une sous-bande de fréquences donnée, dont la largeur correspond à la capacité requise par le faisceau considéré.

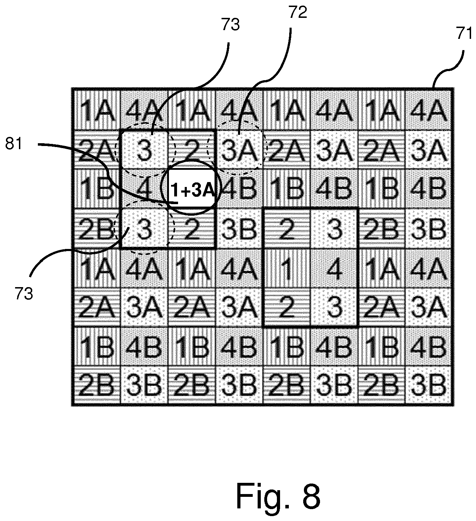

Il est à noter que pour des agencements comportant des faisceaux fortement demandeurs de capacité (demande > 1300 Mbps par exemple), pour lesquels il est nécessaire de prévoir une largeur de bande de fréquence égale, par exemple, au trois quart (75%) de la bande passante d'un amplificateur, le schéma de répartition, tel que celui décrit précédemment, destiné à définir la répartition des sous-bandes disponibles une sous-bande représentant 25% ou 50% de la bande passante d'un amplificateur, reste encore applicable. Cependant, comme l'illustre la figure 8, on doit alors tenir compte de possibles interférences entre un faisceau 81 occupant 75% de la bande passante d'un amplificateur et un ou plusieurs faisceaux voisins 72 ou 73 utilisant une sous-bande commune dans la même polarisation, en prévoyant, par exemple, une gestion particulière des fréquences allouées aux utilisateurs se trouvant dans une zone proche des limites de la zone couverte par un tel faisceau.

La quatrième étape 24 du procédé selon l'invention a pour fonction de réaliser l'affectation d'une ressource physique, d'un amplificateur équipant le satellite, à chacun des faisceaux.

Autrement dit, le procédé réalise au sein de chaque groupe défini précédemment, un second regroupement des faisceaux en sous-groupes, chaque sous-groupe étant associé à un amplificateur de puissance fonctionnant avec le schéma de partage correspondant (avec ou sans séparation en sous-bandes, avec ou sans partage de puissance (Beam Coupling) et avec ou sans multiplexage temporel (Beam Hopping)).

Cette affectation permet de déterminer, pour chaque amplificateur les faisceaux qui seront servi par ledit amplificateur.

Selon l'invention cette affectation est réalisée de façon optimiser l'utilisation des différents amplificateurs de puissance embarqué sur le satellite, en utilisant autant que possible toute la capacité délivrée par chaque amplificateur

Pour des raisons pratiques de limitation de la complexité du harnais, l'affectation des ressource est préférentiellement réalisée antenne par antenne. Il est cependant possible de réaliser cette affectation en considérant plusieurs antennes en même temps.

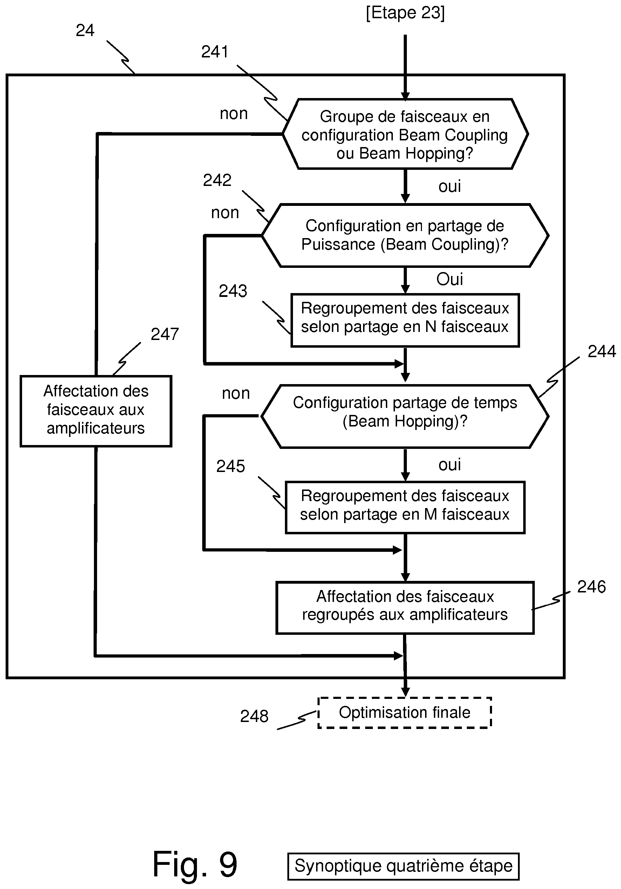

Selon une forme de mise en œuvre particulière de l'invention, prise comme exemple, la quatrième étape 24 d'affectation applique, à chaque groupe constitué après exécution de l'étape 23, un traitement dont le séquencement est illustré par la figure 9. Ce traitement comporte les phases décrites dans la suite du texte.

Dans une première phase 241 de traitement, le procédé selon l'invention détermine si le groupe considéré suit un schéma de partage comportant du partage de puissance (Beam Coupling) ou du multiplexage temporel (Beam Hopping).

Si oui le procédé selon l'invention se poursuit par une phase de traitement 242, durant laquelle il détermine si le groupe considéré suit un schéma de partage comportant du partage de puissance (Beam Coupling)

Si oui il effectue une première opération 243 de regroupement des faisceaux correspondant aux spots adjacents (en ligne ou colonne) servis par une même sous bande de fréquence, en tenant compte du schéma de partage adopté pour le groupe.

Les faisceaux sont ainsi groupés par sous-groupes de N faisceaux, le nombre N dépendant du nombre de faisceaux sur lequel la puissance d'un amplificateur, pour la sous-bande considérée, est distribuée. Dans la pratique le nombre N est généralement égal à 2 ou 4.

Ainsi, par exemple, si le schéma de partage prévoit un partage de puissance (Beam Coupling) entre deux ou quatre faisceaux, les faisceaux formant le groupe considérés sont associés par deux ou par quatre.

Si au contraire le groupe considéré suit un schéma de partage ne comportant pas de partage de puissance, aucun regroupement de faisceaux n'est réalisé: la première opération 243 de regroupement n'est pas exécutée.

Le procédé selon l'invention se poursuit ensuite par une phase de traitement 244, durant laquelle il détermine si le groupe considéré suit un schéma de partage comportant un multiplexage temporel (Beam Hopping).

Si oui il effectue une seconde opération 245 de regroupement des faisceaux servis par une même sous bande de fréquence, en tenant une nouvelle fois compte du schéma de partage adopté pour le groupe.

Dans le cas où aucun partage de puissance n'est réalisé pour le groupe considéré, Les faisceaux sont ainsi groupés par sous-groupes de M faisceaux, le nombre M dépendant du nombre de faisceaux multiplexés temporellement.

Dans le cas où un partage de puissance est réalisé, cette opération est effectuée en conservant les groupes de N faisceaux réalisés par la première opération de regroupement 243.

Les regroupements de faisceaux opérés par l'opération 245, consistent alors à regrouper ces groupes de N faisceaux en structures constituées chacune par k·2N faisceaux. Dans un tel cas, la formation de ces structures suit le schéma en 2 étapes suivant:
1) Réalisation de structures à 2N faisceaux contenant les faisceaux de deux groupes de N faisceaux. Cette étape consiste à effectuer les opérations suivantes:
   a1) Détermination du groupe de N faisceaux présentant la capacité cumulée maximale;
   b1) Détermination d'un second groupe de N faisceaux présentant en addition avec le premier la capacité cumulée minimale;
   c1) Association des deux groupes pour former une structure à 2N faisceaux.
   d1) Répétition des opérations a1), b1) et c1) jusqu'à ce que tous les groupes de N faisceaux soient regroupés en structures à 2N faisceaux ou qu'il ne reste plus qu'un seul groupe.

   Chaque structure est ainsi formée par celui des groupes non encore associés présentant la capacité cumulée maximale et celui des groupes non encore associés présentant avec lui la capacité cumulée minimale.
2) Réalisation de structures contenant les faisceaux de 2k groupes de N faisceaux (k>1 : si k=1 le processus s'arrête au regroupement à 2N faisceaux décrit précédemment). Cette étape consiste à effectuer les opérations suivantes:
   a2) Détermination de la structure à k·N faisceaux présentant la capacité cumulée maximale;
   b2) Détermination d'un second groupe de k N faisceaux présentant en addition avec le premier la capacité cumulée minimale;
   c2) Association des deux structures pour former une structure à 2k·N faisceaux;
   d2) Répétition jusqu'à ce que toutes les structures à k N faisceaux soient regroupées en structures à 2k·N faisceaux, ou qu'il ne reste plus qu'une structure.

Chaque structure étant formée par celle des structures non encore associées présentant la capacité cumulée maximale et celle des structures non encore associées présentant avec lui la capacité cumulée minimale.

L'étape 2), de réalisation de structures contenant les faisceaux de 2k groupes de N faisceaux, est répétée de manière itérative jusqu'à ce que l'on obtienne des structures à M·N faisceaux, M·N étant égal au nombre de faisceaux pouvant être servi par un amplificateur pour la sous-bande considérée, conformément au schéma de partage retenu.

Si au contraire le groupe considéré suit un schéma de partage ne comportant pas de multiplexage temporel, mais seulement un partage de puissance, aucun regroupement des groupes de N faisceaux n'est réalisé: la seconde opération 245 de regroupement n'est pas exécutée.

Après exécution de la première, 243, et/ou de la seconde opération, 245, de regroupement, l'étape 24 se poursuit par une opération 246 d'affectation des ressources physiques proprement dites.

Dans le cas où, pour le groupe considéré, le schéma de partage prévoit un partage de puissance et un multiplexage temporel, l'opération 246 de l'étape 24 affectera alors une sous-bande d'un amplificateur à chaque structure, de sorte que le nombre d'amplificateurs requis pour le groupe considéré est déterminé comme étant égal au nombre maximum de structures dénombrées pour chaque sous-bande du schéma de partage considéré.

Dans le cas où pour le groupe considéré le schéma de partage prévoit seulement un partage de puissance ou un multiplexage temporel, l'opération 246 de l'étape 24 affectera alors une sous-bande d'un amplificateur à chaque sous-groupe de N ou M faisceaux, de sorte que le nombre d'amplificateurs requis pour le groupe considéré est déterminé comme étant égal au nombre maximum de groupes de faisceaux dénombrés pour chaque sous-bande du schéma de partage considéré.

Par ailleurs, si le groupe considéré suit un schéma de partage ne comportant ni partage de puissance, ni multiplexage temporel, aucun regroupement de faisceaux n'est réalisé. Ce dernier cas concerne principalement les groupes de faisceaux contenant des faisceaux requérant des capacités importantes.

L'opération 247 de l'étape 24 affectera alors une sous-bande entière d'un amplificateur à chaque faisceau, de sorte que le nombre d'amplificateurs requis pour le groupe considéré est égal au nombre maximum de faisceau servis dans chaque sous-bande du schéma de partage considéré.

Il est à noter qu'il peut être avantageux en vue de limiter les interférences notamment, que les faisceaux associés, dans le cadre d'un schéma de partage comportant un partage de puissance, à un même amplificateur dans une même sous-bande, soient rayonnés par l'antenne considérée avec des directions de polarisation distinctes.

Ainsi par exemple dans le cas d'association de faisceaux par groupes de deux, les deux faisceaux associés pourront être rayonnés avec des polarisations opposées.

De même dans le cas d'association de faisceaux par groupes de quatre, deux faisceaux associés pourront être rayonnés avec une polarisation donnée, et les deux autres avec la polarisation opposée.

Il est à noter également qu'à l'issue de cette opération de regroupement, les derniers amplificateurs affectés peuvent être seulement partiellement utilisés, sur la totalité de leur bande de fréquence de travail, notamment si le nombre de structures à N·M faisceaux ou de groupes de N ou M faisceaux obtenus dans chaque sous-bande est différent d'une sous-bande à l'autre.

C'est pourquoi, le procédé selon l'invention peut, de manière avantageuse, comporter, comme l'illustre la figure 9, une phase d'optimisation 248 des ressources consistant en un traitement intergroupes, durant laquelle les amplificateurs exploités de manière partielle dans le cadre d'un groupe de faisceaux sont recensés, de telle façon que les ressources devant être pourvues par deux amplificateurs affectés à deux groupes de faisceaux différents, soient pourvues par un seul et même amplificateur. Autrement dit, cette optimisation peut avantageusement être réalisée dans le cas où deux amplificateurs sur 2 groupes différents sont utilisés partiellement sur des sous-bandes disjointes. Un seul amplificateur peut alors être affecté aux faisceaux correspondants.

Il est à noter, en outre, que la capacité demandée par un faisceau peut s'avérer variable au cours du temps, de sorte que l'arrangement des faisceaux réalisé peut tenir compte de différentes configurations temporelles (tableau par année, et/ou par heure dans la journée par exemple).

Il est ainsi par exemple possible de considérer une heure commune, une heure correspondant à une activité maximale pour une majorité de faisceaux et de déterminer, pour cette heure, la capacité requise pour chaque faisceau. L'arrangement des différents faisceaux est alors réalisé en considérant les capacités requises par les différents faisceaux durant une période donnée autour de cette même heure.

Alternativement, il est également possible des considérer pour chaque faisceau une valeur de capacité requise correspondant à une valeur pic sur l'ensemble des plages horaires prises en compte. L'arrangement des différents faisceaux est alors réalisé en minimisant les valeurs pics résultantes des regroupements.

Dans ce cas, la détermination d'un second sous-groupe de faisceaux présentant en addition avec le premier la capacité cumulée minimale revient à rechercher le second sous-groupe permettant de minimiser le pic de capacité requise par l'association des 2 sous-groupes.

Ainsi, à l'issue de l'étape 24, le procédé selon l'invention fournit un schéma optimisé d'allocation de ressources qui permet de déterminer le nombre d'amplificateurs nécessaires pour réaliser la couverture donnée, ainsi que le mode de fonctionnement, le schéma de partage à adopter ainsi que la matrice d'affectation des faisceaux aux amplificateurs. La distribution de capacité obtenue est alors hétérogène sur la couverture (capacité différente suivant les groupes de faisceaux) et peut être reconfigurée de manière flexible par l'utilisation du fonctionnement en temps partagé ou division temporelle (Beam Hopping).

## Revendications

1. Procédé pour distribuer la capacité d'un satellite de communication sur les différents faisceaux destinés à couvrir une zone géographique donnée, ladite zone étant décomposée en une pluralité de spots, chaque spot étant éclairé par un faisceau donné émis par un élément rayonnant d'une antenne satellite et nécessitant une capacité donnée, ledit procédé étant **caractérisé en ce qu'**il met en œuvre:
- une première étape (21) de définition, pour chaque faisceau, de la capacité dont doit bénéficier le faisceau compte tenu de la densité des échanges se produisant au niveau du spot correspondant;
- une deuxième étape (22) d'élaboration d'une table indiquant, pour un amplificateur de puissance présentant différentes caractéristiques de puissance et de bande passante de fonctionnement, le nombre maximum Pᵢ de faisceaux que l'amplificateur peut servir ainsi que la capacité moyenne allouée à chaque faisceau, en fonction des différents schémas de partage de l'amplificateur.
- une troisième étape (23) de formation de groupes de faisceaux, chaque groupe étant **caractérisé par** la valeur moyenne de la capacité des faisceaux constituant le groupe considéré et la détermination du nombre d'amplificateurs nécessaires à chaque groupe pour servir l'ensemble des faisceaux constituant ce groupe;
- une quatrième étape (24) d'allocation des ressources disponibles, durant laquelle le procédé répartit les différents faisceaux sur différents amplificateurs, les faisceaux affectés à un même amplificateur étant déterminés de telle façon que la valeur moyenne de la capacité demandée à ces faisceaux soit égale à la capacité moyenne de référence calculée pour le groupe considéré.

2. Procédé selon la revendication 1, **caractérisé en ce que** la troisième étape (23) est une étape itérative qui met en œuvre les sous-étapes suivantes:
- une première sous-étape (231) durant laquelle le procédé réalise, pour un ensemble de N_{T} faisceaux classés par ordre croissant de capacité, le calcul de la valeur moyenne de la capacité cumulée de ces faisceaux, la capacité requise pour chaque faisceau ayant été déterminée au cours de la première étape (21);
- une seconde sous-étape (232), durant laquelle le procédé selon l'invention associe dans un même groupe i les Nᵢ faisceaux pour lesquels la valeur moyenne de la capacité cumulée est la plus proche d'une valeur donnée, Ci_obj, de capacité moyenne par faisceau; cette valeur étant déterminée, à partir des données de la table élaborée au cours de la deuxième étape (22), de façon à maximaliser le nombre de faisceau pouvant être servis par les amplificateurs de puissance dont dispose le satellite tout en assurant un bilan de liaison optimal;
les Nᵢ faisceaux associés dans un même groupe i à l'issue d'une itération donnée étant retirés des N faisceaux considérés pour l'exécution d'une nouvelle itération;
les itérations étant interrompues dès que les N_{T} faisceaux sont regroupés.

3. Procédé selon l'une des revendications 1 ou 2, **caractérisé en ce que** lors de la quatrième étape (24) d'allocation des ressources le procédé réalise le couplage de plusieurs faisceaux nombre fonction du schéma de partage du groupe constituant un même groupe i et utilisant la même sous bande pour les associés à un amplificateur donné.

4. Procédé selon la revendication 3, **caractérisé en ce que** la quatrième étape (24) comporte les phases d'exécution suivantes:
- une première phase (241) durant laquelle on classe chaque groupe de faisceaux formé en fonction du schéma de partage qui lui est associé, les groupes de faisceaux associés à un schéma de partage ne comportant ni partage de puissance (Beam Coupling) ou ni multiplexage temporel (Beam Hopping) ne faisant pas l'objet d'aucune opération de regroupement systématique ultérieur;
- une deuxième phase (242) durant laquelle on détermine, pour chaque groupe susceptible de faire l'objet d'une opération de regroupement si le schéma de partage qui lui est associé comporte un partage de puissance (Beam Coupling) sur N faisceaux;
- une troisième phase (243) qui réalise le regroupement par N des faisceaux du groupe considéré; cette troisième phase étant exécuté si le schéma de partage associé au groupe comporte un partage de puissance (Beam Coupling) sur N faisceaux;
- une quatrième phase (244) durant laquelle on détermine, pour chaque groupe susceptible de faire l'objet d'une opération de regroupement si le schéma de partage qui lui est associé comporte un multiplexage temporel (Beam Hopping) sur M faisceaux;
- une cinquième phase (245) durant laquelle on réalise le regroupement par M des faisceaux du groupe considéré; cette cinquième phase étant exécuté si le schéma de partage associé au groupe comporte un multiplexage temporel (Beam Hopping) sur M faisceaux;
- une sixième phase (246) durant laquelle on réalise pour chaque groupe, en fonction des regroupements réalisés, l'affectation d'un amplificateur à chaque faisceau.
- Une septième phase (247) durant laquelle, pour chaque groupe n'ayant fait l'objet d'aucun regroupement de ses faisceaux, on réalise l'affectation directe d'un amplificateur à chaque faisceau.

5. Procédé selon la revendication 4, **caractérisé en ce que** pour chaque groupe associé à un schéma de partage comportant un partage de puissance (Beam Coupling) et un multiplexage temporel (Beam Hopping), la cinquième phase (245) réalise un regroupement des faisceaux du groupe en utilisant le regroupement en sous-groupes de N faisceaux réalisé au cours de la troisième phase (243) de la quatrième étape (24).

6. Procédé selon la revendication 5, **caractérisé en ce que** durant la cinquième phase (245) de la quatrième étape (24), les regroupements de faisceaux consistent à regrouper les sous-groupes de N faisceaux en structures constituées chacune par k·2N faisceaux, ces structures étant constituée en réalisant en deux étapes:
- une première étape itérative de réalisation de structures à 2N faisceaux contenant les faisceaux de deux groupes de N faisceaux, de telle sorte que chaque structure est formée par celui des groupes non encore associés présentant la capacité cumulée maximale et celui des groupes non encore associés présentant avec lui la capacité cumulée minimale;
- une seconde étape itérative de réalisation de structures contenant les faisceaux de 2k groupes de N faisceaux (k>1 : si k=1 le processus s'arrête au regroupement à 2N faisceaux décrit précédemment);
la second étape étant répétée de manière itérative jusqu'à ce que l'on obtienne des structures à M·N faisceaux, M·N étant égal au nombre de faisceaux pouvant être servi par un amplificateur pour la sous-bande considérée, conformément au schéma de partage retenu.

7. Procédé selon la revendication 6, **caractérisé en ce que** la première étape, de réalisation de structures à 2N faisceaux contenant les faisceaux de deux groupes de N faisceaux, consiste à effectuer les opérations suivantes:
- détermination du groupe de N faisceaux présentant la capacité cumulée maximale;
- détermination d'un second groupe de N faisceaux présentant en addition avec le premier la capacité cumulée minimale;
- association des deux groupes pour former une structure à 2N faisceaux;
- répétition des opérations précédentes jusqu'à ce que tous les groupes de N faisceaux soient regroupés en structures à 2N faisceaux, ou qu'il ne reste plus qu'un groupe.

8. Procédé selon la revendication 7, **caractérisé en ce que** la seconde étape itérative de réalisation de structures contenant les faisceaux de 2k groupes de N faisceaux consiste à effectuer les opérations suivantes:
- détermination de la structure à k·N faisceaux présentant la capacité cumulée maximale;
- détermination d'un second groupe de k·N faisceaux présentant en addition avec le premier la capacité cumulée minimale;
- association des deux structures pour former une structure à 2k·N faisceaux;
- répétition jusqu'à ce que toutes les structures à k·N faisceaux soient regroupées en structures à 2k·N faisceaux ou qu'il ne reste plus qu'une structure;
chaque structure étant formée, pour une itération donnée, par celle des structures non encore associées présentant la capacité cumulée maximale et celle des structures non encore associées présentant avec lui la capacité cumulée minimale.

9. Procédé selon l'une quelconque des revendications 4 à 8, **caractérisé en ce que** la quatrième étape (24) comporte une phase complémentaire (248) d'optimisation finale des ressources consistant en un traitement intergroupes, qui recense les amplificateurs exploités de manière partielle dans le cadre d'un groupe de faisceaux, et qui attribue ces amplificateurs à des faisceaux d'un groupe différent utilisant la bande non utilisée par le premier groupe.

## Patentansprüche

1. Verfahren zum Verteilen der Kapazität eines Kommunikationssatelliten auf die verschiedenen Strahlen, die zum Abdecken einer gegebenen geographischen Zone bestimmt sind, wobei die Zone in mehrere Punkte unterteilt ist, wobei jeder Punkt durch einen gegebenen Strahl beleuchtet wird, der von einem Strahlungselement einer Satellitenantenne ausgesendet wird und eine gegebene Kapazität erfordert, wobei das Verfahren **dadurch gekennzeichnet ist, dass** es Folgendes durchführt:
- einen ersten Schritt (21) des Definierens, für jeden Strahl, der Kapazität, die der Strahl unter Berücksichtigung der Dichte der an dem entsprechenden Punkt auftretenden Austausche benötigt;
- einen zweiten Schritt (22) des Erstellens einer Tabelle, die für einen Leistungsverstärker mit unterschiedlichen Leistungs- und Betriebsbandbreiten-Charakteristiken die maximale Anzahl Pᵢ von Strahlen, die der Verstärker bedienen kann, sowie die jedem Strahl zugewiesene durchschnittliche Kapazität in Abhängigkeit von den verschiedenen Sharing-Schemata des Verstärkers angibt;
- einen dritten Schritt (23) des Bildens von Strahlengruppen, wobei jede Gruppe durch den Mittelwert der Kapazität der die betrachtete Gruppe bildenden Strahlen und das Bestimmen der Anzahl von Verstärkern gekennzeichnet ist, die jede Gruppe zum Bedienen aller diese Gruppe bildenden Strahlen benötigt,
- einen vierten Schritt (24) des Zuweisens verfügbarer Ressourcen, bei dem das Verfahren die verschiedenen Strahlen auf verschiedene Verstärker verteilt, wobei die einem selben Verstärker zugeordneten Strahlen so bestimmt werden, dass der Mittelwert der von diesen Strahlen geforderten Kapazität gleich der für die betrachtete Gruppe berechneten mittleren Referenzkapazität ist.

2. Verfahren nach Anspruch 1, **dadurch gekennzeichnet, dass** der dritte Schritt (23) ein iterativer Schritt ist, der die folgenden Teilschritte durchführt:
- einen ersten Teilschritt (231), bei dem das Verfahren für einen Satz von N_{T} Strahlen, die in der Reihenfolge nach steigender Kapazität klassifiziert sind, den Mittelwert der kumulativen Kapazität dieser Strahlen berechnet, wobei die für jeden Strahl erforderliche Kapazität im Laufe des ersten Schritts (21) bestimmt wurde;
- einen zweiten Teilschritt (232), bei dem das erfindungsgemäße Verfahren die Nᵢ Strahlen, für die der Mittelwert der kumulativen Kapazität einem gegebenen Wert Ci_obj der mittleren Kapazität pro Strahl am nächsten liegt, in einer selben Gruppe i assoziiert; wobei dieser Wert auf der Basis der Daten der im zweiten Schritt (22) erstellten Tabelle so bestimmt wird, dass die Anzahl der Strahlen maximiert wird, die von den dem Satelliten zur Verfügung stehenden Leistungsverstärkern bedient werden können, alles unter Gewährleistung eines optimalen Verbindungsbudgets;
wobei die Nᵢ Strahlen, die in einer selben Gruppe i nach einer gegebenen Iteration assoziiert sind, aus den für die Ausführung einer neuen Iteration in Betracht gezogenen N Strahlen entfernt werden;
wobei die Iterationen unterbrochen werden, sobald die N_{T} Strahlen gruppiert sind.

3. Verfahren nach Anspruch 1 oder 2, **dadurch gekennzeichnet, dass** das Verfahren im vierten Schritt (24) des Zuweisens von Ressourcen mehrere Strahlen koppelt, deren Anzahl eine Funktion des Sharing-Schemas der Gruppe ist, die eine gleiche Gruppe i bildet und das gleiche Teilband für die mit einem gegebenen Verstärker Assoziierten verwendet.

4. Verfahren nach Anspruch 3, **dadurch gekennzeichnet, dass** der vierte Schritt (24) die folgenden Ausführungsphasen beinhaltet:
- eine erste Phase (241), in der jede gebildete Strahlengruppe in Abhängigkeit von dem mit ihr assoziierten Sharing-Schema klassifiziert wird, wobei die Strahlengruppen, die mit einem Sharing-Schema assoziiert sind, das weder Leistungs-Sharing (Beam Coupling) noch Zeitmultiplexing (Beam Hopping) beinhaltet, nicht Gegenstand einer nachfolgenden systematischen Gruppierungsoperation sind;
- eine zweite Phase (242), in der für jede Gruppe, die Gegenstand einer Gruppierungsoperation sein kann, festgestellt wird, ob das mit ihr assoziierte Sharing-Schema ein Leistung-Sharing (Beam Coupling) über N Strahlen umfasst;
- eine dritte Phase (243), die die Gruppierung in N Strahlen der betrachteten Gruppe durchführt; wobei diese dritte Phase durchgeführt wird, wenn das mit der Gruppe assoziierte Sharing-Schema ein Leistung-Sharing (Beam Coupling) über N Strahlen beinhaltet;
- eine vierte Phase (244), in der für jede Gruppe, die Gegenstand einer Gruppierungsoperation sein kann, festgestellt wird, ob das mit ihr assoziierte Sharing-Schema Zeitmultiplexing (Beam Hopping) über M Strahlen beinhaltet;
- eine fünfte Phase (245), in der die Gruppierung in M Strahlen der betrachteten Gruppe durchgeführt wird; wobei diese fünfte Phase durchgeführt wird, wenn das mit der Gruppe assoziierte Sharing-Schema (Beam Hopping) über M Strahlen umfasst;
- eine sechste Phase (246), in der für jede Gruppe, in Abhängigkeit von den durchgeführten Gruppierungen, jedem Strahl ein Verstärker zugeordnet wird;
- eine siebte Phase (247), in der für jede Gruppe, die nicht Gegenstand einer Gruppierung ihrer Strahlen war, jedem Strahl ein Verstärker direkt zugeordnet wird.

5. Verfahren nach Anspruch 4, **dadurch gekennzeichnet, dass** die fünfte Phase (245) für jede Gruppe, die mit einem Sharing-Schema assoziiert ist, das Leistungs-Sharing (Beam Coupling) und Zeitmultiplexing (Beam Hopping) beinhaltet, eine Gruppierung der Strahlen der Gruppe unter Verwendung der Gruppierung in Untergruppen von N Strahlen durchführt, die in der dritten Phase (243) des vierten Schritts (24) durchgeführt wird.

6. Verfahren nach Anspruch 5, **dadurch gekennzeichnet, dass** in der fünften Phase (245) des vierten Schritts (24) die Strahlengruppierungen darin bestehen, die Untergruppen von N Strahlen in Strukturen zu gruppieren, die jeweils aus k·2N Strahlen bestehen, wobei diese Strukturen durch Ausführen in zwei Schritten gebildet werden:
- einem ersten iterativen Schritt des Realisierens von Strukturen mit 2N Strahlen, die die Strahlen von zwei Gruppen von N Strahlen enthalten, so dass jede Struktur durch diejenige der noch nicht assoziierten Gruppen mit der maximalen kumulativen Kapazität und diejenige der noch nicht assoziierten Gruppen mit der minimalen kumulativen Kapazität gebildet wird;
- einen zweiten iterativen Schritt des Realisierens von Strukturen, die die Strahlen von 2k Gruppen von N Strahlen enthalten (k>1: wenn k=1 ist, stoppt der Prozess bei der zuvor beschriebenen Gruppierung von 2N-Strahlen);
wobei der zweite Schritt iterativ wiederholt wird, bis Strukturen mit MN Strahlen erhalten werden, wobei MN gleich der Anzahl der Strahlen ist, die von einem Verstärker für das betrachtete Unterband gemäß dem gewählten Sharing-Schema bedient werden können.

7. Verfahren nach Anspruch 6, **dadurch gekennzeichnet, dass** der erste Schritt des Realisierens von Strukturen mit 2N Strahlen, die die Strahlen von zwei Gruppen von N Strahlen enthalten, darin besteht, die folgenden Operationen auszuführen:
- Bestimmen der Gruppe von N Strahlen mit der maximalen kumulativen Kapazität;
- Bestimmen einer zweiten Gruppe von N Strahlen, die zusätzlich zur ersten die minimale kumulative Kapazität aufweisen;
- Assoziieren der beiden Gruppen zu einer Struktur mit 2N Strahlen;
- Wiederholen der vorherigen Operationen, bis alle Strahlen zu Strukturen mit 2N Strahlen gruppiert sind oder nur eine Gruppe übrigbleibt.

8. Verfahren nach Anspruch 7, **dadurch gekennzeichnet, dass** der zweite iterative Schritt des Realisierens von Strukturen, die die Strahlen von 2k Gruppen von N Strahlen enthalten, darin besteht, die folgenden Operationen durchzuführen:
- Bestimmen der Struktur mit k·N Strahlen mit der maximalen kumulativen Kapazität;
- Bestimmen einer zweiten Gruppe von kN Strahlen, die zusätzlich zur ersten die minimale kumulative Kapazität aufweisen;
- Assoziieren der beiden Strukturen zu einer Struktur mit 2k·N Strahlen;
- Wiederholen, bis alle Strukturen mit kN Strahlen zu Strukturen mit 2kN Strahlen gruppiert sind oder nur noch eine Struktur übrig bleibt;
wobei jede Struktur für eine gegebene Iteration durch diejenige der noch nicht assoziierten Strukturen mit der maximalen kumulativen Kapazität und diejenige der noch nicht assoziierten Strukturen mit der minimalen kumulativen Kapazität gebildet wird.

9. Verfahren nach einem der Ansprüche 4 bis 8, **dadurch gekennzeichnet, dass** der vierte Schritt (24) eine komplementäre abschließende Ressourcenoptimierungsphase (248) beinhaltet, die aus einer gruppenübergreifenden Verarbeitung besteht, die Verstärker erfasst, die teilweise im Rahmen einer Gruppe von Strahlen genutzt werden, und die diese Verstärker Strahlen einer anderen Gruppe zuordnet, die das von der ersten Gruppe nicht verwendete Band nutzt.

## Claims

1. Method for distributing the capacity of a communication satellite between the various beams intended to cover a given geographical zone, said zone being divided into a plurality of spots, each spot being irradiated by one given beam emitted by one radiating element of a satellite antenna and requiring a given capacity, said method being **characterized in that** it implements:
- a first step (21) of defining, for each beam, the capacity from which the beam must benefit on account of the density of exchanges occurring in the corresponding spot;
- a second step (22) of generating a table indicating, for a power amplifier having various power and operating bandwidth characteristics, the maximum number Pᵢ of beams that the amplifier is able to deliver and the average capacity allocated to each beam, depending on the various amplifier sharing schemes;
- a third step (23) of forming groups of beams, each group being **characterized by** the average value of the capacity of the beams forming the group in question, and determining the number of amplifiers required in each group to deliver all of the beams forming this group;
- a fourth step (24) of allocating available resources, during which step the method distributes the various beams between various amplifiers, the beams assigned to the same amplifier being determined in such a way that the average value of the capacity demanded by these beams is substantially equal to the reference average capacity computed for the group in question.

2. Method according to Claim 1, **characterized in that** the third step (23) is an iterative step that implements the following substeps:
- a first substep (231) during which the method computes, for a set of N_{T} beams classed in increasing order of capacity, the average value of the cumulative capacity of these beams, the capacity required for each beam having been determined in the first step (21);
- a second substep (232), during which the method according to the invention associates, in a same group i, the Nᵢ beams for which the average value of the cumulative capacity is closest to a given value, Ci_obj, of the average capacity per beam; this value being determined, from the data of the table generated in the second step (22), so as to maximize the number of beams able to be delivered by the power amplifiers available to the satellite while ensuring an optimal link budget;
the Nᵢ beams associated in a same group i at the end of a given iteration being withdrawn from the N beams considered in the execution of a new iteration;
the iterations being interrupted once the N_{T} beams have been grouped.

3. Method according to either of Claims 1 and 2, **characterized in that**, in the fourth step (24) of allocating resources, the method couples a plurality of beams whose number depends on the sharing scheme of the group forming a same group i and using the same subband for the associates with a given amplifier.

4. Method according to Claim 3, **characterized in that** the fourth step (24) comprises the following phases of execution:
- a first phase (241) during which each group of beams formed is classified depending on the sharing scheme that is associated therewith, the groups of beams associated with a sharing scheme employing neither beam coupling nor beam hopping not being the subject of any subsequent systematic grouping operation;
- a second phase (242) during which it is determined, for each group subjectable to a grouping operation, whether the sharing scheme that is associated therewith employs N-beam beam coupling;
- a third phase (243) that groups beams of the group in question into groups of N; this third phase being executed if the sharing scheme associated with the group employs N-beam beam coupling;
- a fourth phase (244) during which it is determined, for each group subjectable to a grouping operation, whether the sharing scheme that is associated therewith employs M-beam beam hopping;
- a fifth phase (245) during which beams of the group in question are grouped into groups of M; this fifth phase being executed if the sharing scheme associated with the group employs M-beam beam hopping;
- a sixth phase (246) during which, for each group, depending on the groupings performed, an amplifier is assigned to each beam;
- a seventh phase (247) during which, for each group the beams of which have been assigned to no group, an amplifier is directly assigned to each beam.

5. Method according to Claim 4, **characterized in that**, for each group associated with a sharing scheme employing beam coupling and beam hopping, the fifth phase (245) groups the beams of the groups using the grouping into subgroups of N beams carried out in the third phase (243) of the fourth step (24).

6. Method according to Claim 5, **characterized in that**, during the fifth phase (245) of the fourth step (24), the beams are grouped by grouping subgroups of N beams into structures each made up of k2N beams, these structures being formed by carrying out two steps:
- a first iterative step of producing 2N-beam structures containing the beams of two groups of N beams, such that each structure is formed by that of the not yet associated groups having the maximum cumulative capacity and that of the not yet associated groups having therewith the minimum cumulative capacity;
- a second iterative step of producing structures containing the beams of 2k groups of N beams (k>1: if k=1 the process stops with the 2N-beam grouping described above);
the second step being repeated iteratively until M·N-beam structures are obtained, M·N being equal to the number of beams able to be delivered by an amplifier for the subband in question, in accordance with the adopted sharing scheme.

7. Method according to Claim 6, **characterized in that** the first step, of producing 2N-beam structures containing the beams of two groups of N beams, consists in performing the following operations:
- determining the group of N beams having the maximum cumulative capacity;
- determining a second group of N beams having in addition with the first the minimum cumulative capacity;
- associating the two groups in order to form a 2N-beam structure;
- repeating the preceding operations until all the groups of N beams are grouped into 2N-beam structures, or there remains only one group.

8. Method according to Claim 7, **characterized in that** the second iterative step of producing structures containing the beams of 2k groups of N beams consists in performing the following operations:
- determining the kN-beam structure having the maximum cumulative capacity;
- determining a second group of kN beams having in addition with the first the minimum cumulative capacity;
- associating the two structures to form a 2kN-beam structure;
- repeating, until all the kN-beam structures are grouped into 2kN-beam structures or there remains only one structure;
each structure being formed, for a given iteration, by that of the not yet associated structures having the maximum cumulative capacity and that of the not yet associated structures having therewith the minimum cumulative capacity.

9. Method according to any one of Claims 4 to 8, **characterized in that** the fourth step (24) comprises a complementary phase (248) of final resource optimization consisting in intergroup processing, which tallies the amplifiers partially exploited in the context of a group of beams, and which attributes these amplifiers to beams of a different group using the band not used by the first group.
